# EUROPÄISCHE PATENTSCHRIFT

(11) **EP 2 507 903 B1**
(45) Veröffentlichungstag und Bekanntmachung des Hinweises auf die Patenterteilung: **29.03.2017**
(21) Anmeldenummer: 10792861.6
(22) Anmeldetag: 22.11.2010
(51) Int. Cl.: H02M 1/42

(54) **FLUSSWANDLER MIT LEISTUNGSFAKTORKORREKTUR**
FORWARD CONVERTER WITH POWER FACTOR CORRECTION
CONVERTISSEUR DU TYPE "FORWARD" AVEC CORRECTION DE FACTEUR DE PUISSANCE

(30) Priorität: 02.12.2009 AT 19072009
(43) Veröffentlichungstag der Anmeldung: 10.10.2012
(73) Patentinhaber: Siemens Aktiengesellschaft, 80333 München (DE)
(72) Erfinder: AUGESKY, Christian, A-1100 Wien (AT)
(74) Vertreter: Maier, Daniel Oliver
(86) Internationale Anmeldenummer: PCT/EP2010/067878
(87) Internationale Veröffentlichungsnummer: WO 2011/067128

(56) Entgegenhaltungen:
- JP-A- 4 244 781
- JP-A- 4 265 666
- US-A- 4 280 174
- US-A- 4 736 284
- US-A- 5 224 025
- US-A- 5 757 626

## Beschreibung

Die Erfindung betrifft einen Flusswandler zur Umwandlung einer eingangsseitigen Wechselspannung in eine ausgangsseitige Gleichspannung, wobei der Flusswandler einen Transformator mit wenigstens zwei in Serie angeordneten Primärwicklungen und einer in gleicher Richtung gewickelten Sekundärwicklung umfasst und getaktet arbeitet. Zudem betrifft die Erfindung ein Verfahren zum Betreiben eines solchen Wandlers.

In üblichen Netzstromversorgungen zur Anwendung kommende Wandler weisen in der Regel stark oberwellenbehaftete Eingangsströme bwz. einen Leistungsfaktor deutlich unter Eins auf. Der Grund dafür liegt in dem Erfordernis, eine gleichstromseitige Speicherkapazität über einen wechselseitigen Gleichrichter nachzuladen. Kurze, nadelförmige Stromspitzen sind das Resultat. Die Höhe dieser Stromspitzen wird ohne zusätzliche Maßnahmen nur durch die Innenwiderstände eines eingangsseitigen Netzes, eines Netzfilters, eines Gleichrichters und einer Speicherkapazität begrenzt.

Stromversorgungen an einem einphasigen Stromnetz, insbesondere solche mit größeren umgesetzten Leistungen (200W und darüber), benötigen eine spezielle Konstruktion, um den gültigen technischen Vorschriften zu genügen. Diese konstruktiven Maßnahmen können einen erheblichen Kostenanteil an einer Stromversorgung aufweisen. Zudem werden die Baugröße und der Wirkungsgrad infolge zusätzlicher Verlustleistungen negativ beeinflusst.

Um einen Anteil störender Oberschwingungen bei der Stromentnahme eines Wandlers zu reduzieren, ist nach dem Stand der Technik eine sogenannte Leistungsfaktorkorrektur (Power Factor Correction, PFC) vorgesehen.

Eine passive Leistungsfaktorkorrektur wird mittels einer hohen Eingangsinduktivität erreicht. Der große Induktivitätswert ist notwendig, um den Stromflusswinkel während einer Nachladephase deutlich zu erhöhen. Sinnvoll ist dies nur bei kleinen Leistungen, weil sonst die entsprechenden Drosseln zu groß und schwer sind. Neben den Kosten für die Drosseln ist deren Verlustleistung zu berücksichtigen.

Für weite Eingangsspannungsbereiche eignet sich diese Methode wegen der damit verbundenen Varianz des maximalen Eingangsstromes wenig.

Alternativ dazu ist eine aktive Leistungsfaktorkorrektur bekannt, bei der eine eigene Wandlerstufe den aufgenommenen Strom dem zeitlichen Verlauf einer sinusförmig verlaufenden Netzspannung nachsteuert. Solche aktiven PFC-Schaltungen sind in der Regel als Aufwärtswandler ausgebildet und einem Gleichrichter direkt nachgeschaltet. Sie laden einen großen Kondensator auf eine Spannung oberhalb der Scheitelspannung der Eingangswechselspannung auf. Der Aufwärtswandler arbeitet auf einer wesentlich höheren Frequenz als eine Netzversorgung, wodurch eine deutlich kleinere Induktivität benötigt wird. Es entsteht ein annähernd kontinuierlicher Stromfluss mit geringer Stromwelligkeit, wobei der mittlere Strom durch eine Steuerschaltung dem Momentanwert der Netzspannung angepasst wird.

Gegenüber einer passiven Leistungsfaktorkorrektur ist eine aktive PFC-Schaltung zwar aufwändiger, allerdings sind höhere Wirkungsgrade und eine bessere Oberwellenunterdrückung möglich. Nachteilig neben dem Aufwand ist die Prinzip bedingt über der maximalen Netzspannung liegende Ausgangspannung einer solchen PFC-Schaltung, wodurch vor allem bei hohen Netzeingangsspannungen in Bezug auf Komponentenbelastungen und Isolationsspannungen Probleme auftreten können.

Anstelle eines Aufwärtswandlers kann eine aktive PFC-Schaltung einen Abwärtswandler umfassen, an dem eine Ausgangsspannung kleiner der Netzspannung anliegt. Dadurch sinkt allerdings der mögliche Stromflusswinkel. Der Energieeintrag in einen Speicherkondensator kann nur bei einer Netzspannung größer der Spannung am Speicherkondensator erfolgen. Zudem ist die Stromwelligkeit höher als bei einer Lösung mit einem Aufwärtswandler und die Ansteuerung eines masseseitigen Leistungsschalters ist bei einem Aufwärtswandler einfacher.

Die aktiven PFC-Schaltungen haben den Nachteil, dass sie zusätzlich zum eigentlichen Wandler vorgesehen werden müssen. Das bringt gegenüber Wandlern ohne PFC-Funktionalität einen beachtlichen Mehraufwand und zusätzliche Verluste.

Ein Wandler zur Umwandlung einer eingangsseitigen Wechselspannung in eine ausgangsseitige Gleichspannung ist aus der US 5 224 025 bekannt, wobei ein Transformator während eines Arbeitstakts über eine Primärwicklung mittels zweier primärseitig angeordneter Schalter und eines Kondensators aufgeladen wird.

Die US 4 280 174 A zeigt einen DC-DC-Wandler mit zwei in Serie angeordneten primärseitigen Wicklungen, wobei an einen Verbindungspunkt der beiden primärseitigen Wicklungen ein Kondensator angeschlossen ist, um die Stabilität der Schaltung zu erhöhen. Mittels zweier Schalter werden die primärseitigen Wicklungen synchron getaktet an eine eingangsseitige Gleichspannung geschaltet. Entsprechende Schaltungen ist auch aus der JP 4 244781 A und der JP 4 265666 A bekannt.

Der Erfindung liegt die Aufgabe zugrunde, für einen Flusswandler der eingangs genannten Art eine Verbesserung gegenüber dem Stand der Technik anzugeben.

Erfindungsgemäß wird diese Aufgabe gelöst durch einen Wandler gemäß Anspruch 1 und ein Verfahren zum Betreiben des Wandlers gemäß Anspruch 10. Weiterbildungen der Erfindung sind in den Unteransprüchen angegeben.

Erfindungsgemäß erfolgt eine Leistungsfaktorkorrektur, indem in einer Leitphase eines Arbeitstakts während einer Einschaltdauer eines ersten Schalters ein Speicherkondensator zum Aufladen in Reihe mit einer ersten Primärwicklung mittels des ersten eingeschalteten Schalters über Gleichrichtungselemente an die Wechselspannung geschaltet ist und indem in der Leitphase eines Arbeitstakts während einer Einschaltdauer eines zweiten Schalters zum Entladen des Speicherkondensators eine zweite Primärwicklung mittels des zweiten eingeschalteten Schalters an den Speicherkondensator parallelgeschaltet ist.

Die Erfindung geht also grundsätzlich vom Funktionsprinzip eines Eintaktflusswandlers als DC/DC-Wandler aus. Das Funktionsprinzip des Eintaktflusswandlers wird mit jenem eines Abwärtsschaltreglers kombiniert, wobei jedoch keine zusätzliche Induktivität benutzt wird. Auf diese Weise ist ein Wandler angegeben, mittels dem besonders verlustarm Energie vom Eingang zum Ausgang mit einer steuerbaren Leistungsfaktorkorrektur übertragen wird.

Eine PFC-Funktionalität wird ohne Hinzufügen einer weiteren Wandlerstufe und ohne einer weiteren großen Induktivität erreicht.

Ein weiterer Vorteil besteht darin, dass die am ersten Schalter und an der ersten Primärwicklung anliegende Spannung nur der Differenz aus gleichgerichteter Eingangsspannung und der Spannung am Speicherkondensator entspricht. Die Belastung dieser Komponenten wird demnach auch bei hohen Eingangsspannungen niedrig gehalten. Damit kann auch der Aufwand für den Schutz gegen Netztransienten gesenkt werden.

Durch eine geeignete Anpassung der Spannung am Speicherkondensator an die Eingangsspannung wird ein sehr weiter Eingangsspannungsbereich abgedeckt. Die Spannung am Speicherkondensator wird bei kleiner Eingangsspannung niedrig und bei großer Eingangsspannung hoch vorgegeben. Es ist also eine Weitbereichsfähigkeit ohne Umschaltung gegeben, das heißt ohne Notwendigkeit einen Spannungsverdoppler vorzusehen.

Entsprechend dem erfindungsgemäßen Verfahren wird in der Leitphase eines Arbeitstakts während einer Einschaltdauer des ersten Schalters eingangsseitig zugeführte Energie mittels des eingeschalteten ersten Schalters über die erste Primärwicklung auf die Sekundärseite übertragen und im Speicherkondensator gespeichert und in der Leitphase während einer Einschaltdauer (T_{ON}2) des zweiten Schalters elektrische Energie aus dem Speicherkondensator mittels des eingeschalteten zweiten Schalters über die zweite Primärwicklung auf die Sekundärseite übertragen. Die Übertragung der Energie von der Primärseite auf die Sekundärseite erfolgt also alternativ über die erste oder über die zweite Primärwicklung durch die magnetische Kopplung mit der Sekundärwicklung. Dabei wird
während der Übertragung über die erste Primärwicklung gleichzeitig Energie im Speicherkondensator gespeichert. Diese gespeicherte Energie wird über die zweite Primärwicklung auf die Sekundärseite übertragen. Diese Funktionsweise bewirkt einen breiten Stromflusswinkel bei gleichzeitiger Begrenzung des eingangsseitig entnommenen Stromes.

Eine vorteilhafte Weiterbildung des Wandlers sieht vor, dass eine Filterkondensatoreinheit angeordnet ist, welche an einen Leiter der Wechselspannung angeschlossen ist und der Gleichrichtungselemente nachgeordnet sind. Diese Filterkondensatoreinheit dient dabei der Glättung und ist kleiner als übliche Puffereingangskondensatoren ausgelegt.

Für die sekundärseitige Ausgestaltung des Flusswandlers ist es von Vorteil, wenn an die Sekundärwicklung über eine sekundärseitige Gleichrichterschaltung und eine sekundärseitige Flussdrossel ein Ausgangskondensator angeschlossen ist und wenn der Ausgangskondensator über eine sekundärseitige Freilaufdiode an die sekundärseitige Flussdrossel angeschlossen ist. Günstigerweise besteht diese sekundärseitige Gleichrichterschaltung aus einer Gleichrichterdiode.

Primärseitig ist in einer vorteilhaften Ausgestaltung vorgesehen, dass parallel zu der Reihenschaltung bestehend aus Speicherkondensator und erster Primärwicklung eine primärseitige Freilaufdiode angeordnet ist. Die erste Primärwicklung bildet dabei mit dem ersten Schalter, der primärseitigen Freilaufdiode und dem Speicherkondensator einen Abwärtsschaltregler.

Zur Erweiterung des Dimensionierungsspielraums bzw. des Stromflusswinkels sieht eine alternative Ausführungsform vor, dass ein Freilaufpfad mit einer primärseitigen Freilaufdiode die erste Primärwicklung anzapft. Eine weitere Alternative besteht darin, die erste Primärwicklung und eine erste Hilfswicklung magnetisch zu koppeln und die erste Hilfswicklung in Reihe mit einer primärseitigen Freilaufdiode parallel zum Speicherkondensator anzuordnen.

Eine vorteilhafte Ausprägung der Erfindung ist gegeben, wenn eine Verbindung zwischen den beiden Primärwicklungen an einen Anschluss des Speicherkondensators angeschlossen ist, dessen zweiter Anschluss mit einem Bezugspotenzial verbunden ist, und wenn eine Reihenschaltung bestehend aus zweiter Primärwicklung und zweitem Schaltelement parallel zum Speicherkondensator angeordnet ist. Dieser einfache Aufbau ermöglicht eine einfache Dimensionierung der einzelnen Bauteile und eine kompakte Bauweise.

In einer einfachen Weiterentwicklung ist in Reihe mit dem zweiten Schaltelement eine zweite Diode angeordnet ist, deren Durchlassrichtung entgegengesetzt der Durchlassrichtung einer Paralleldiode des zweiten Schalters ist. Paralleldioden sind mitunter bauteilbedingt in den verwendeten Schaltern enthalten.

Für eine einfache Regelung ist es von Vorteil, wenn zwischen dem zweiten Anschluss des Speicherkondensators und dem Bezugspotenzial ein erster Strommesswiderstand angeordnet ist und wenn zwischen zweitem Schalter und dem zweiten Anschluss des Speicherkondensators ein zweiter Strommesswiderstand angeordnet ist. Es reicht dann ein Komparator aus, um den primärseitigen Storm zu messen. Entweder fließt ein erster primärseitiger Strom durch den Speicherkondensator und den ersten Strommesswiderstand oder es fließt ein zweiter primärseitiger Strom durch den zweiten Schalter und den zweiten Strommesswiderstand, ohne dass dabei eine gegenseitige Beeinflussung gegeben ist.

Beim Betreiben des Wandlers ist vorteilhafterweise vorgesehen, dass während einer Leitphase zu Beginn der erste Schalter eingeschaltet und der zweite Schalter ausgeschaltet wird und anschließend der zweite Schalter eingeschaltet und der erste Schalter ausgeschaltet wird und der zweite Schalter so lange eingeschaltet bleibt, bis ein Strom durch den zweiten Schalter einen vorgegebenen Schwellenwert erreicht. Die Steuerung der übertragenen Energie erfolgt also über den primärseitigen Strom, wobei dessen Schwellenwert durch eine sekundärseitige Spannungsregelung vorgegeben wird.

Dabei ist es des Weiteren von Vorteil, wenn das Verhältnis der Einschaltzeitdauern des ersten und des zweiten Schalters in der Weise geregelt wird, dass die Spannung am Speicherkondensator im Mittel konstant bleibt. Das Spannungsgleichgewicht im Speicherkondensator wird also unabhängig von der sekundärseitigen Spannungsregelung und der Abschaltsteuerung des primärseitigen Stromes geregelt. Die Stellgröße dieses zweiten langsameren Regelkreises bildet die Einschaltdauer des ersten Schalters.

Die Erfindung wird nachfolgend in beispielhafter Weise unter Bezugnahme auf die beigefügten Figuren erläutert. Es zeigen in schematischer Darstellung:
- Fig. 1: Wandlerschaltung nach dem Stand der Technik mit Eingangsinduktivität
- Fig. 2a: Aktive PFC-Schaltung nach dem Stand der Technik als Aufwärtswandler ausgebildet
- Fig. 2b: Aktive PFC-Schaltung nach dem Stand der Technik als Abwärtswandler ausgebildet
- Fig. 3: Ausführungsbeispiel eines erfindungsgemäßen Wandlers
- Fig. 4: Stromdiagramm mit Schaltzuständen der Schalter
- Fig. 5: Verlauf des Eingangstromes und der Eingangsspannung
- Fig. 6a: Primärseitiger Freilaufpfad mit Anzapfung der ersten Primärwicklung
- Fig. 6b: Primärseitiger Freilaufpfad mit an die erste Primärwicklung gekoppelter Hilfswicklung
- Fig. 7: Ausführungsbeispiel gemäß Fig. 3 mit als MOS-FETs ausgebildete Schalter

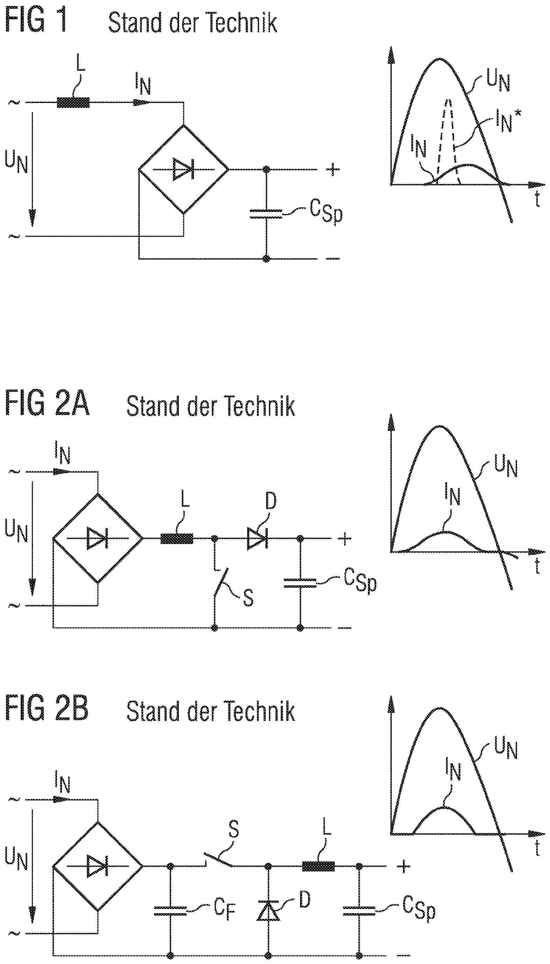

Die Fig. 1-3 zeigen bekannte PFC-Schaltungen, welche eine Eingangswechselspannung in eine Gleichspannung eines Zwischenkreises umwandeln. Bei einer passiven Schaltung (Fig. 1) ist vor einer Gleichrichtereinheit eine ausreichend große Induktivität L angeordnet. Der Stromflusswinkel wird auf diese Weise gegenüber dem ursprünglichen Stromverlauf IN* erhöht, wobei es jedoch zu einer zu berücksichtigend Phasenverschiebung kommt.

Die aktiven Schaltungen (Fig. 2a und 2b) umfassen einen getakteten Schalter S, mittels dem neben dem Stromflusswinkel auch die Phasenlage des Stromes IN beeinflussbar ist.

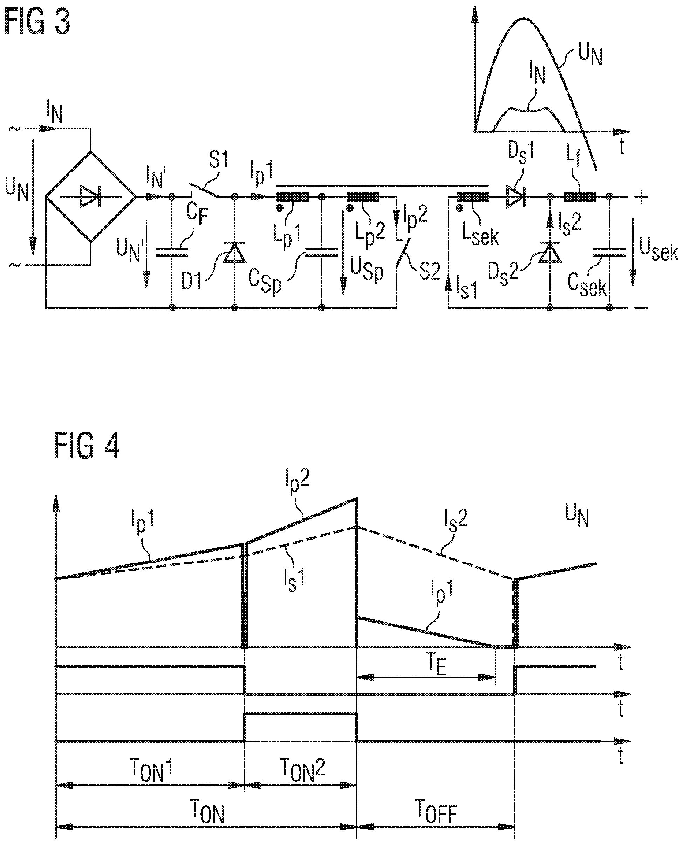

Der in Fig. 3 dargestellte Wandler umfasst eine eingangsseitige Gleichrichterbrücke, die an eine Wechselspannung U_{N} angeschlossen ist und einen Wechselstrom IN in einen gleichgerichteten Strom I_{N}' umwandelt. Der Gleichrichterbrücke nachgeschaltet ist ein Filterkondensator C_{F}, welcher klein in Bezug auf die Frequenz der Wechselspannung U_{N} dimensioniert ist. Dieser Filterkondensator C_{F} kann vorteilhafterweise auch vor der Gleichrichterbrücke angeordnet sein, wodurch eine Aufladung infolge eines Energierückflusses aus dem Wandler ausgeschlossen wird.

Der Wandler umfasst weiters einen Transformator mit zwei Primärwicklungen Lₚ1, Lₚ2 und einer Sekundärwicklung Lₛₑₖ. Der Anfang der ersten Primärwicklung Lₚ1 ist über einen ersten Schalter S1 an den Ausgang der Gleichrichterbrücke angeschlossen. Bei geschlossenem erstem Schalter S1 fließt ein erster Primärstrom Iₚ1 durch die erste Primärwicklung Lₚ1. Das Ende dieser ersten Primärwicklung Lₚ1 ist mit dem Anfang der zweiten Primärwicklung Lₚ2 verbunden, wobei ein Verbindungspunkt zwischen diesen Primärwicklungen Lₚ1, Lₚ2 an einen Anschluss eines Speicherkondensators C_{Sp} angeschlossen ist. Der zweite Anschluss dieses Speicherkondensators C_{Sp} ist an ein primärseitiges Bezugspotenzial angeschlossen.

Das Ende der zweiten Primärwicklung Lₚ2 ist über einen zweiten Schalter S2 ebenfalls an das Bezugspotenzial angeschlossen, sodass die Reihenschaltung bestehend aus zweiter Primärwicklung Lₚ2 und zweitem Schalter S2 parallel zum Speicherkondensator C_{Sp} geschaltet ist. Bei geschlossenem zweitem Schalter S2 fließt ein zweiter Primärstrom Iₚ2 durch die zweite Primärwicklung Lₚ2.

Zudem ist eine primärseitige Freilaufdiode D1 vorgesehen welche parallel zu der Reihenschaltung bestehend aus erster Primärwicklung Lₚ1 und Speicherkondensator C_{Sp} angeordnet ist.

Über einen Kern des Transformators besteht eine Kopplung zwischen den Primärwicklungen Lₚ1, Lₚ2 und der Sekundärwicklung Lₛₑₖ. Die in der Sekundärwicklung Lₛₑₖ induzierte Spannung bewirkt einen sekundärseitigen Strom Iₛₑₖ, welcher über eine Gleichrichterdiode Dₛ1 und eine Flussdrossel L_{f} einen sekundärseitigen Ausgangskondensator Cₛₑₖ auflädt. An diesem Ausgangskondensator Cₛₑₖ liegt die Ausgangsspannung Uₛₑₖ an.

Während einer Abschaltphase treibt die Flussdrossel L_{f} den sekundärseitigen Strom über eine sekundärseitige Freilaufdiode Dₛ2 weiter.

Der Wandler bewirkt einen Verlauf des eingangsseitigen Stromes I_{N} in der Weise, dass nur im Bereich der Nulldurchgänge der Wechselspannung U_{N} kurzzeitig kein Strom I_{N} fließt. Dazwischen steigt der Strom I_{N} an, wobei im Bereich der höchsten Spannung U_{N} eine Reduktion des Stromes I_{N} erfolgt, sodass der Stromverlauf insgesamt abgeflacht ist.

Die Stromentnahme aus einem eingangsseitig angeschlossenen Netz erfolgt also nicht in Form einer netzsynchronen Sinusfunktion, allerdings werden Stromspitzen vermieden und der Stromflusswinkel stark erweitert, sodass Stromoberwellen unterhalb geforderter Grenzwerte bleiben.

Die in Fig. 4 dargestellten Stromverläufe resultieren aus der Regelung des Wandlers. Eine sekundärseitige Spannungsregelung gibt einen Schwellenwert I_{p soll} für den primärseitigen Strom Iₚ1 bzw. Iₚ2 vor. Zu Beginn einer Leitphase wird der erste Schalter S1 eingeschaltet. Der erste Primärstrom Iₚ1 durch die erste Primärwicklung Lₚ1 steigt an, bis der erste Schalter S1 nach einer mittels eines zweiten Regelkreises vorgegebenen Einschaltdauer T_{ON}1 wieder ausgeschaltet wird. Der zweite Regelkreis bestimmt dabei das Spannungsniveau des Speicherkondensators C_{Sp} und hält dieses im Mittel konstant.

Gleichzeitig mit dem Ausschalten des ersten Schalters S1 wird der zweite Schalter S2 eingeschaltet. Dabei ist es von Vorteil, eher eine geringfügige Überlappung als eine zeitliche Lücke zwischen den Einschaltzuständen vorzusehen. Während der Einschaltdauer T_{ON}2 des zweiten Schalters S2 fließt der zweite Primärstrom Iₚ2 durch die zweite Primärwicklung Lₚ2 und steigt an, bis der vorgegebene Schwellenwert I_{p soll} erricht ist. Dann wird die Leitphase durch Abschalten des zweiten Schalters S2 beendet.

Sekundärseitig fließt während einer Leitphase infolge der magnetischen Kopplung des Transformators ein erster sekundärseitiger Strom Iₛ1 durch die Sekundärwicklung. Dabei wird der Transformator durch einen Teil des primärseitigen Stromes magnetisiert, wodurch sich während der Leitphase eine Differenz zwischen primärseitigem Iₚ1 bzw. Iₚ2 und dem sekundärseitigem Strom Iₛ1 dividiert durch das Übersetzungsverhältnis des Transformators ergibt. Das Übersetzungsverhältnis ist dabei das Verhältnis einer Primärwicklung Lₚ1 bzw. Lₚ2 zur Sekundärwicklung Lₛₑₖ.

Während der Ausschaltdauer T_{OFF}, in der beide Schalter S1, S2 ausgeschaltet sind, wird über den Transformator keine Energie übertragen. Der Transformator wird dabei entmagnetisiert. Die Dauer T_{E} der Entmagnetisierung ist kürzer als die Ausschaltdauer T_{OFF}, was durch entsprechende Dimensionierung der Wicklungsverhältnisse bzw. eine zusätzliche Entmagnetisierungswicklung sichergestellt ist.

Die sekundärseitige Flussdrossel L_{F} treibt während der Ausschaltdauer T_{OFF} den sekundärseitigen Strom Iₛₑₖ weiter, wobei dieser linear abfällt, bis der erste Schalter S1 wieder einschaltet.

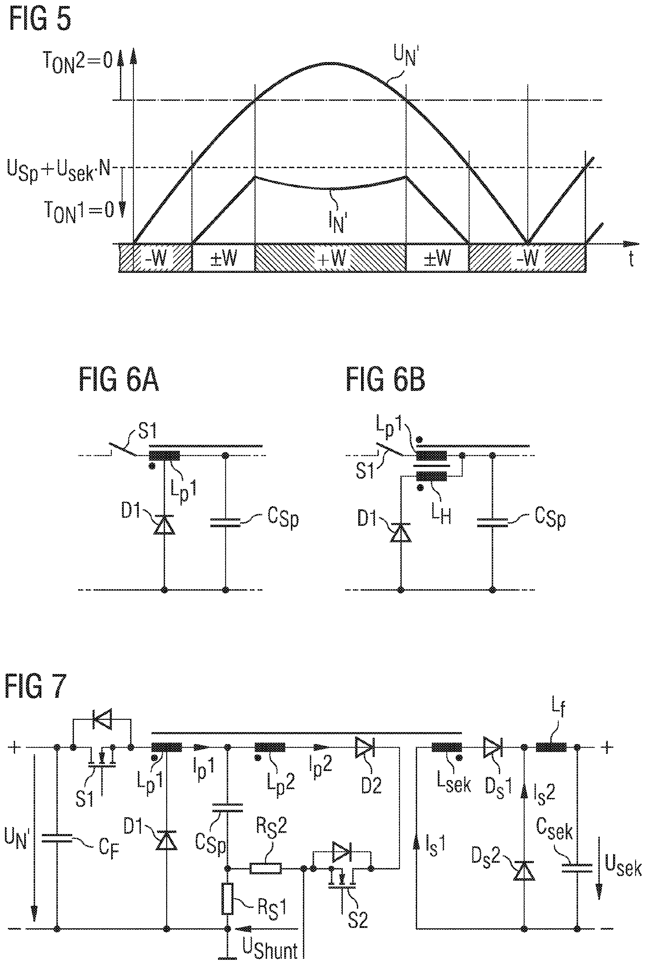

Fig. 5 zeigt den Verlauf der gleichgerichteten Eingangsspannung U_{N}' und des Stromes I_{N}' in einem stabilen Lastpunkt. Dargestellt sind die möglichen Zeitabschnitte, in welchen dem Speicherkondensator C_{Sp} Energie W entweder entnommen oder zugeführt wird. In einem stabilen Lastpunkt ergibt sich bei geeigneter Einstellung der maximalen Einschaltdauer T_{ON}1 des ersten Schalters S1 eine ausgeglichene Energiebilanz im Speicherkondensator C_{Sp}. In jenen Phasen, in welchen die eingangsseitige Spannung U_{N}' kleiner der Summe aus der Spannung U_{Sp} am Speicherkondensator C_{Sp} und der mit dem Übersetzungsverhältnis N des Transformators multiplizierten sekundärseitigen Spannung Uₛₑₖ ist, wird die Energie zur Gänze aus diesem Speicherkondensator C_{Sp} entnommen.

Wird die eingangsseitige Spannung U_{N}' größer als die Summe aus der Spannung U_{Sp} am Speicherkondensator C_{Sp} und der mit dem Übersetzungsverhältnis N des Transformators multiplizierten sekundärseitigen Spannung Uₛₑₖ, erfolgt die Energieaufnahme zunächst sowohl aus einem eingangsseitig angeschlossenen Netz, als auch aus dem Speicherkondensator C_{Sp}. Der entsprechende Stromverlauf ist in Fig. 4 dargestellt. Bei weiterem Anstieg der eingangsseitigen Spannung U_{N}' erfolgt die Energieaufnahme zur Gänze aus dem Netz, wobei der von der sekundärseitigen Spannungsregelung vorgegebene Stromschwellwert I_{p soll} bereits innerhalb der Einschaltdauer T_{ON}1 des ersten Schalters erreicht wird.

Die Vorgabe für die gewünschte Spannung U_{Sp} am Speicherkondensator C_{Sp} erfolgt nach strategischen Gesichtspunkten. Kriterien sind dabei eine Reduktion der Spannung am ersten Schalter S1, eine Nutzung der gespeicherten Energie zur Netzausfallsüberbrückung, eine Optimierung des Stromflusswinkels, ein gesteuertes Hochfahren beim Einschalten, eine Optimierung der Schaltbedingungen für spannungsloses Schalten etc.

In den Figuren 6a und 6b sind vorteilhafte Ausführungen eines primärseitigen Freilaufs dargestellt. Beispielsweise wird die erste Primärwicklung Lₚ1 geteilt ausgeführt (Fig. 6a) und der Freilaufpfad mit der primärseitigen Freilaufdiode D1 ist an dem Teilungspunkt angeschlossen, das heißt die erste Primärwicklung Lₚ1 wird mittels Freilauf angezapft. Alternativ dazu ist im Freilauf eine Hilfswicklung L_{H} als zusätzliche Entmagnetisierungswicklung angeordnet (Fig. 6b). Diese Hilfswicklung L_{H} ist mit der ersten Primärwicklung Lₚ1 magnetisch gekoppelt und weist dabei dieselbe Wicklungsrichtung auf. Ziel dieser Maßnahmen ist eine Erweiterung des Dimensionierungsspielraums bzw. des Stromflusswinkels.

Eine praktische Ausführung eines Wandlers gemäß Fig. 3 ist in Fig. 7 dargestellt. Mit als MOS-FETs ausgebildeten Schaltern S1, S2 muss speziell auf deren technologiebedingte Paralleldioden Rücksicht genommen werden. Insbesondere in Serie zum zweiten Schalter S2 ist dies notwendig, um einen Kurzschluss der zweiten Primärwicklung Lₚ2 beim Hochlaufen zu verhindern. Beim Hochlaufen ist die Speicherkondensatorspannung U_{Sp} noch nahezu Null oder sehr klein gegenüber der Differenzspannung zwischen eingangsseitiger Spannung U_{N}' und Speicherkondensatorspannung U_{Sp}. Es ist daher eine zweite Diode D2 angeordnet, deren Kathode mit der Kathode der Paralleldiode im zweiten Schalter S2 verbunden ist. Der primärseitige Freilaufpfad mit der primärseitigen Freilaufdiode D1 zapft die erste Primärwicklung Lₚ1 an.

Um die Regelung des Primärstromes Iₚ1 bzw. Iₚ2 einfach zu gestalten ist eine Anordnung von Strommesswiderständen R_{S}1, R_{S}2, an welchen eine Messspannung U_{Shunt} abfällt, vorgesehen. Dadurch kann mit nur einem Komparator der primärseitige Strom, der entweder als erster Primärstrom Iₚ1 durch den Kondensator C_{Sp} und einen ersten Strommesswiderstand R_{S}1 fließt, oder als zweiter Primärstrom Iₚ2 durch den zweiten Schalter S2 und einen zweiten Strommesswiderstand R_{S}2 fließt, ohne gegenseitige Beeinflussung detektiert werden. Mit einer günstigen Dimensionierung der Strommesswiderstände R_{S}1, R_{S}2 ist auch eine unterschiedliche Windungszahl der beiden Primärwicklungen Lₚ1, Lₚ2 ausgleichbar.

Der eingangsseitige Filterkondensator C_{F} ist in seiner Größe so bemessen, dass während einer Schaltperiode des Wandlers mit einer Dauer von ca. 3-20 µs die Spannung an diesem Kondensator C_{F} nicht mehr als um einen vorgegebenen Spannungswert (z.B. 10V) abfällt. Somit ist ein kleiner Filterkondensator C_{F} mit einer Kapazität von wenigen Mikrofarad ausreichend, um für den Wandler eine eingangsseitige Spannung U_{N}' mit ausreichender Steifigkeit bereitzustellen. Zusammen mit einem auf die Schaltfrequenz optimierten Netzfilter vor dem eingangsseitigen Gleichrichtungselementen werden damit auch die Anforderungen an die Filterung hochfrequenter Netzstörungen erfüllt.

Die Sekundärseite des in Fig. 7 dargestellten Wandlers entspricht der Darstellung in Fig. 3.

Die dargestellte Wandlerausführung ist in keiner Weise einschränkend und stellt nur eine mögliche spezielle Ausführung eines erfindungsgemäßen Wandlers dar.

## Patentansprüche

1. Flusswandler zur Umwandlung einer eingangsseitigen Wechselspannung (U_{N}) in eine ausgangsseitige Gleichspannung (Uₛₑₖ), wobei der Flusswandler einen Transformator mit wenigstens zwei in Serie angeordneten Primärwicklungen (Lₚ1, Lₚ2) und einer in gleicher Richtung gewickelten Sekundärwicklung (Lₛₑₖ) umfasst und getaktet arbeitet, **dadurch gekennzeichnet, dass** eine Leistungsfaktorkorrektur erfolgt, indem in einer Leitphase eines Arbeitstakts während der Einschaltdauer (T_{ON}1) eines ersten Schalters (S1) ein Speicherkondensator (C_{Sp}) zum Aufladen in Reihe mit einer ersten Primärwicklung (Lₚ1) mittels des ersten eingeschalteten Schalters (S1) über Gleichrichtungselemente an die Wechselspannung (U_{N}) geschaltet ist und indem in der Leitphase eines Arbeitstakts während einer Einschaltdauer (T_{ON}2) eines zweiten Schalters (S2) zum Entladen des Speicherkondensators (C_{Sp}) eine zweite Primärwicklung (Lₚ2) mittels des zweiten eingeschalteten Schalters (S2) an den Speicherkondensator (C_{Sp}) parallel geschaltet ist, dass während der Leitphase zu Beginn für die Einschaltdauer (T_{ON}1) des ersten Schalters der erste Schalter (S1) eingeschaltet und der zweite Schalter (S2) ausgeschaltet ist und anschließend der zweite Schalter (S2) eingeschaltet und der erste Schalter (S1) ausgeschaltet ist und der zweite Schalter (S2) so lange eingeschaltet bleibt, bis ein Strom (Iₚ2) durch den zweiten Schalter (S2) einen vorgegebenen Schwellenwert (I_{p soll}) erreicht, und dass während einer Ausschaltdauer (T_{OFF}) der erste und der zweite Schalter (S1, S2) ausgeschaltet sind.

2. Flusswandler nach Anspruch 1, **dadurch gekennzeichnet, dass** eine Filterkondensatoreinheit (C_{F}) angeordnet ist, welche an einen Leiter der Wechselspannung (U_{N}) angeschlossen ist und der Gleichrichtungselemente nachgeordnet sind.

3. Flusswandler nach Anspruch 1 oder 2, **dadurch gekennzeichnet, dass** an die Sekundärwicklung (Lₛₑₖ) über eine sekundärseitige Gleichrichterschaltung (Dₛ1) und eine sekundärseitige Flussdrossel (L_{F}) ein Ausgangskondensator (Cₛₑₖ) angeschlossen ist und dass der Ausgangskondensator (Cₛₑₖ) über eine sekundärseitige Freilaufdiode (Dₛ2) an die sekundärseitige Flussdrossel (L_{F}) angeschlossen ist.

4. Flusswandler nach einem der Ansprüche 1 bis 3, **dadurch gekennzeichnet, dass** parallel zu der Reihenschaltung bestehend aus Speicherkondensator (C_{Sp}) und erster Primärwicklung (Lₚ1) eine primärseitige Freilaufdiode (D1) angeordnet ist.

5. Flusswandler nach einem der Ansprüche 1 bis 3, **dadurch gekennzeichnet, dass** ein Freilaufpfad mit einer primärseitigen Freilaufdiode (D1) vorgesehen ist, welcher die erste Primärwicklung (Lₚ1) anzapft.

6. Flusswandler nach einem der Ansprüche 1 bis 3, **dadurch gekennzeichnet, dass** die erste Primärwicklung (Lₚ1) und eine erste Hilfswicklung (L_{H}) magnetisch gekoppelt sind und dass die erste Hilfswicklung (L_{H}) in Reihe mit einer primärseitigen Freilaufdiode (D1) parallel zum Speicherkondensator (C_{Sp}) angeordnet ist.

7. Flusswandler nach einem der Ansprüche 1 bis 6, **dadurch gekennzeichnet, dass** eine Verbindung zwischen den beiden Primärwicklungen (Lₚ1, Lₚ2) an einen Anschluss des Speicherkondensators (C_{Sp}) angeschlossen ist, dessen zweiter Anschluss mit einem Bezugspotenzial verbunden ist, dass eine Reihenschaltung bestehend aus zweiter Primärwicklung (Lₚ2) und zweitem Schaltelement (S2) parallel zum Speicherkondensator (C_{S}p) angeordnet ist.

8. Flusswandler nach Anspruch 7, **dadurch gekennzeichnet, dass** in Reihe mit dem zweiten Schaltelement (S2) eine zweite Diode (D2) angeordnet ist, deren Durchlassrichtung entgegengesetzt der Durchlassrichtung einer Paralleldiode des zweiten Schalters (S2) ist.

9. Flusswandler nach Anspruch 7 oder 8, **dadurch** zwischen dem zweiten Anschluss des Speicherkondensators (C_{S}p) und dem Bezugspotenzial ein erster Strommesswiderstand (R_{S}1) angeordnet ist und dass zwischen zweitem Schalter (S2) und dem zweiten Anschluss des Speicherkondensators (C_{Sp}) ein zweiter Strommesswiderstand (R_{S}1) angeordnet ist.

10. Flusswandler nach einem der vorangegangenen Ansprüche, **dadurch gekennzeichnet, dass** das Verhältnis der Einschaltzeitdauern (T_{ON}1, T_{ON}2) des ersten (S1) und des zweiten Schalters (S2) in der Weise geregelt ist, dass die Spannung am Speicherkondensator (C_{Sp}) im Mittel konstant bleibt.

## Claims

1. Flux converter for converting an input-side AC voltage (U_{N}) into an output-side DC voltage (Uₛₑₖ), wherein the flux converter comprises a transformer having at least two serially arranged primary windings (Lₚ1, Lₚ2) and a secondary winding (Lₛₑₖ) wound in the same direction and operating in a clocked manner,
**characterised in that**
a power factor correction takes place by, in a conducting phase of a work cycle during the on-time period (T_{ON}1) of a first switch (S1), a storage capacitor (C_{Sp}) for charging being switched in series with a first primary winding (Lₚ1) to the AC voltage (U_{N}) by way of rectification elements by means of the first switched-on switch (S1) and by, in the conducting phase of a work cycle during an on-time period (T_{ON}2) of a second switch (S2) for discharging the storage capacitor (C_{Sp}) , a second primary winding (Lₚ2) being switched in parallel to the storage capacitor (C_{Sp}) by means of the second switched-on switch (S2), that during the conducting phase at the beginning for the on-time period (T_{ON}1) of the first switch, the first switch (S1) is switched on and the second switch (S2) is switched off and then the second switch (S2) is switched on and the first switch (S1) is switched off and the second switch (S2) remains switched on until such time as a current (Iₚ2) through the second switch (S2) reaches a predetermined threshold value (I_{p soll}) and that during an off-time period (*T_{OFF}*) the first and second switches (S1, S2) are switched off.

2. Flux converter according to claim 1, **characterised in that** a filter capacitor unit (C_{F}) is provided which is connected to a conductor of the AC voltage (U_{N}) and downstream of which are arranged rectification elements.

3. Flux converter according to claim 1 or 2, **characterised in that** an output capacitor (Cₛₑₖ) is connected to the secondary winding (Lₛₑₖ) by way of a secondary-side rectifier circuit (D_{S}1) and a secondary-side flux choke (L_{F}), and that the output capacitor (Cₛₑₖ) is connected by way of a secondary-side freewheeling diode (D_{S}2) to the secondary-side flux choke (L_{F}).

4. Flux converter according to one of claims 1 to 3, **characterised in that** a primary-side freewheeling diode (D1) is arranged parallel to the series circuit consisting of storage capacitor (C_{Sp}) and first primary winding (Lₚ1).

5. Flux converter according to one of claims 1 to 3, **characterised in that** a freewheeling path having a primary-side freewheeling diode (D1) is provided which taps the first primary winding (Lₚ1).

6. Flux converter according to one of claims 1 to 3, **characterised in that** the first primary winding (Lₚ1) and a first auxiliary winding (L_{H}) are magnetically coupled and that the first auxiliary winding (L_{H}) is arranged in series with a primary-side freewheeling diode (D1) in parallel to the storage capacitor (C_{Sp}) .

7. Flux converter according to one of claims 1 to 6, **characterised in that** a link between the two primary windings (Lₚ1, Lₚ2) is connected to one terminal of the storage capacitor (C_{Sp}), the second terminal whereof is connected to a reference potential, and that a series circuit consisting of second primary winding (Lₚ2) and second switching element (S2) is arranged parallel to the storage capacitor (C_{Sp}).

8. Flux converter according to claim 7, **characterised in that** arranged in series with the second switching element (S2) is a second diode (D2), the conducting direction of which is opposite to the conducting direction of a parallel diode of the second switch (S2).

9. Flux converter according to claim 7 or 8, **characterised in that** a first current sensing resistor (R_{S}1) is arranged between the second terminal of the storage capacitor (C_{Sp}) and the reference potential, and that a second current sensing resistor (R_{S}1) is arranged between the second switch (S2) and the second terminal of the storage capacitor (C_{Sp}).

10. Flux converter according to one of the preceding claims, **characterised in that** the ratio between the on-time periods (T_{ON}1, T_{ON}2) of the first switch (S1) and second switch (S2) is regulated in such a manner that the voltage at the storage capacitor (C_{Sp}) remains constant on average.

## Revendications

1. Convertisseur de flux pour la conversion d'une tension alternative côté entrée (U_{N}) en une tension continue côté sortie (Uₛₑₖ), le convertisseur de flux comprenant un transformateur comportant au moins deux enroulements primaires (Lₚ1, Lₚ2) montés en série et un enroulement secondaire (Lₛₑₖ) enroulé dans le même sens et fonctionnant de façon cadencée, **caractérisé en ce qu'**une correction de facteur de puissance a lieu, dans lequel, dans une phase de conduction d'une période de travail pendant la durée d'enclenchement (T_{ON}1) d'un premier commutateur (S1), un condensateur de puissance (C_{S}p) à charger monté en série avec un premier enroulement primaire (Lₚ1) est relié à la tension alternative (U_{N}) au moyen du premier commutateur enclenché (S1) par le biais d'éléments redresseurs et, dans la phase de conduction d'une période de travail pendant une durée d'enclenchement (T_{ON}2) d'un second commutateur (S2), pour le déchargement du condensateur de puissance (C_{Sp}), un second enroulement primaire (Lₚ2) est relié en parallèle au condensateur de puissance (C_{Sp}) au moyen du second commutateur enclenché (S2), **en ce que**, pendant la phase de conduction, au début, le premier commutateur (S1) est fermé et le second commutateur (S2) est ouvert pour la durée d'enclenchement (T_{ON}1) du premier commutateur et, ensuite, le second commutateur (S2) est fermé et le premier commutateur (S1) est ouvert et le second commutateur (S2) reste fermé jusqu'à ce qu'un courant (Iₚ2) à travers le second commutateur (S2) atteigne une valeur seuil (I_{p soll}) prédéfinie, et **en ce que** le premier et le second commutateur (S1, S2) sont ouverts pendant une durée de coupure (T_{OFF}).

2. Convertisseur de flux selon la revendication 1, **caractérisé en ce qu'**il est prévu une unité de condensateur de filtrage (C_{F}) qui est connectée à un conducteur de la tension alternative (U_{N}) et est montée derrière les éléments redresseurs.

3. Convertisseur de flux selon la revendication 1 ou 2, **caractérisé en ce qu'**un convertisseur de sortie (Cₛₑₖ) est relié à l'enroulement secondaire (Lₛₑₖ) par le biais d'un circuit redresseur côté secondaire (D_{S}1) et d'une bobine de flux côté secondaire (L_{F}) et **en ce que** le condensateur de sortie (Cₛₑₖ) est relié à la bobine de flux côté secondaire (L_{F}) par le biais d'une diode de marche à vide côté secondaire (D_{S}2).

4. Convertisseur de flux selon l'une des revendications 1 à 3, **caractérisé en ce qu'**une diode de marche à vide côté primaire (D1) est montée en parallèle au circuit série formé du condensateur de puissance (C_{Sp}) et du premier enroulement primaire (Lₚ1).

5. Convertisseur de flux selon l'une des revendications 1 à 3, **caractérisé en ce qu'**il est prévu un chemin de marche à vide avec une diode de marche à vide côté primaire (D1) qui prélève sur le premier enroulement primaire (Lₚ1).

6. Convertisseur de flux selon l'une des revendications 1 à 3, **caractérisé en ce que** le premier enroulement primaire (Lₚ1) et un premier enroulement auxiliaire (L_{H}) sont couplés magnétiquement et **en ce que** le premier enroulement auxiliaire (L_{H}) est monté en série avec une diode de marche à vide côté primaire (D1) parallèlement au condensateur de puissance (C_{Sp}).

7. Convertisseur de flux selon l'une des revendications 1 à 6, **caractérisé en ce qu'**une connexion entre les deux enroulements primaires (Lₚ1, Lₚ2) est reliée à une borne du condensateur de puissance (C_{Sp}) dont la seconde borne est reliée à un potentiel de référence, **en ce qu'**un circuit série formé du second enroulement primaire (Lₚ2) et du second élément de commutation (S2) est monté en parallèle au condensateur de puissance (C_{Sp}).

8. Convertisseur de flux selon la revendication 7, **caractérisé en ce qu'**une seconde diode (D2) est montée en série avec le second élément de commutation (S2), diode dont le sens de passage est opposé au sens de passage d'une diode parallèle du second commutateur (S2).

9. Convertisseur de flux selon la revendication 7 ou 8, **caractérisé en ce qu'**une première résistance de mesures du courant (R_{S}1) est montée entre la seconde borne du condensateur de puissance (C_{Sp}) et le potentiel de référence et **en ce qu'**une seconde résistance de mesure de courant (R_{S}1) est montée entre le second commutateur (S2) et la seconde borne du condensateur de puissance (C_{Sp}).

10. Convertisseur de flux selon l'une des revendications précédentes, **caractérisé en ce que** le rapport des durées d'enclenchement (T_{ON}1, T_{ON}2) du premier (S1) et du second commutateur (S2) est fixé de manière à ce que la tension aux bornes du condensateur de puissance (C_{Sp}) reste en moyenne constante.
